# EUROPEAN PATENT APPLICATION

(11) **EP 3 324 347 A1**
(43) Date of publication of application: **23.05.2018**
(21) Application number: 17200451.7
(22) Date of filing: 24.05.2011
(51) Int. Cl.: G06Q 10/06, G06Q 10/08, G06Q 50/30, G06Q 10/10

(54) **METHOD FOR VEHICLE CONDITIONING AND PROVISION**

(30) Priority: 13.08.2010 DE 102010036984
(62) Divisional of application: 11733809.5
(71) Applicant: arwe Holding GmbH, 85356 München-Flughafen (DE)
(72) Inventor: Gabrysch, David, 40547 Düsseldorf (DE); Peschla, Donald, 89079 Ulm (DE); Engelmaier, Helmut, 85395 Attenkirchen (DE)
(74) Representative: Michalski Hüttermann & Partner Patentanwälte mbB

(57) **Abstract**

This invention relates to a method for vehicle conditioning and provision. It particularly relates to a method for the conditioning and provision of hired vehicles and/or used vehicles. Vehicles under the invention are passenger cars as well as commercial vehicles. Apart from that, the method according to the invention is also suitable to condition and provide other vehicles such as two-wheelers or the like.

## Description

This invention relates to a method for vehicle conditioning and provision. It particularly relates to a method for the conditioning and provision of hired vehicles and/or used vehicles. Vehicles under the invention are passenger cars as well as commercial vehicles. Apart from that, the method according to the invention is also suitable to condition and provide other vehicles such as two-wheelers or the like.

In the field of vehicle renting as well as prior to the delivery of new vehicles, there is are necessity to condition and provide vehicles. While in the field of vehicle renting, there is the need to eliminate signs of use and dirt caused by the previous hirer prior to rehiring, in the field of the delivery of new vehicles, there is the need to eliminate production residues and dirt which typically result from vehicle production. In both cases, a great number of vehicles must be conditioned within a time as short as possible to provide them for rehiring or to deliver or hand them over to a new owner. Particularly in the field of vehicle renting, the dead time of a vehicle, in which it is not hired to a hirer, shall be as short as possible to achieve a high degree of utilisation of the vehicle fleet and thus increase profitability. This necessity is particularly important when there is a high demand for hired vehicles combined with restricted space for vehicle storage. This is the case at airports or large railway stations, for example, where a great number of hirers use hired cars to get to their final destinations and return from them to the airports or railway stations. The area provided to stock the vehicle fleet is restricted so that it is desirable to quickly condition and provide vehicles for rehiring when they have been returned by the hirers after completion of the hiring period.

Taking this into account, it is the object of this invention to specify an improved method to condition and provide vehicles, particularly hired vehicles, to achieve fast availability of vehicles to be conditioned and provided at minimised space requirements.

This object is fulfilled through a method according to claim 1. Embodiments of the method according to the invention are provided in the dependent claims.

Therefore, a method to condition vehicles, particularly hired vehicles, is specified including the following steps:
- supply of vehicle to a conditioning facility;
- automated identification of the vehicle from an unambiguous identification mark;
- automated detection of tyre pressure and/or tread depth;
- detection of damage and/or technical defects of the interior and/or automotive body;
- supply of the vehicle to automatic outside cleaning;
- supply of the vehicle cleaned on the outside to interior cleaning, and
- provision of the cleaned vehicle in a pick-up or workshop area
which characterises through the collection and evaluation of information about tyre pressure and/or tread depth as well as of detected damage and/or technical defects in combination with the unambiguous identification of the vehicle in a data processing system, the electronic marking of the vehicle depending on the evaluation result in the data processing system and through parking of the vehicle in the pick-up or workshop area depending on the mark.

The method according to the invention allows advantageous fast and reliable cleaning, conditioning and provision of vehicles. The method according to the invention particularly allows for a high turnaround related to vehicles, that is fast reception, checking, cleaning and provision of hired vehicles.

In an embodiment of the method according to the invention, at least the detection of tyre pressure and/or tread depth as well as the detection of mileage and fuel level are carried out prior to cleaning the vehicle.

In another embodiment of the method, the detection of tyre pressure and/or tread depth is carried out by means of load sensors. This may particularly include the installation of corresponding load sensors on and/or inside the track of the supply to automated outside cleaning. Those sensors may then, while the vehicle to be conditioned is passing over the load sensors, in a computer-based process specify a girth centre area of the vehicle tyre and measure the forces exerted crosswise to the driving direction whereas measurement takes place in a part of the girth centre area. From the average measured values, partial pressures from the force profile of the girth centre area can be determined. An automatic comparison of the force profile with the force profiles stored in a data processing system allows conclusions as to tyre pressure and/or tread depth.

In particular, it may be intended that, at the application of the method according to the invention to condition and provide hired vehicles, it is intended that a vehicle which is to be returned to a hire company by a hirer after the completion of the hiring period is received by a service employee after the automated detection of the unambiguous vehicle mark and supplied to a conveyor belt that transports the vehicle first to outside cleaning and afterwards to interior cleaning. This reduces faulty measurements of the tyre pressure since only accordingly trained personnel drive a vehicle over the load sensors which increases repeatability of measurements.

In another embodiment of the invention, identification of the vehicle is carried out by means of an RFID sensor which reads an unambiguous RFID mark attached to the vehicle without contact. RFID marks have the advantage that usually they can be read without contact independent of the vehicle's degree of dirt by means of corresponding receiving systems.

RFID marks also have the advantage that they can be installed at any position within a large area and that it is not required to attach identification marks in the visible area of the vehicle body. However, according to the invention, it may be intended that a vehicle can be identified only, or in addition to RFID marks, through other marks. To that respect, the identification of the vehicle through it's license number by means of a respective video system and machine vision computer program as well as identification through a barcode are particularly suitable.

In a particularly favourable embodiment of the method according to the invention, automated outside cleaning and interior cleaning are carried out on a cleaning track consisting of a continuous conveyor belt on which the vehicles are first subject to automated outside cleaning and then to interior cleaning. Experience has shown that, by setting up such a sequence of cleaning processes on a continuous conveyor system, process sequences can be optimised resulting in a particularly even utilisation of systems and resources. Thanks to that even utilisation, the vehicle throughput during conditioning can be considerably increased allowing for considerably more economic vehicle conditioning. The conveyor belt preferably moves at a speed of ≥ 8m/min, preferably at ≥ 10m/min. The throughput per cleaning track amounts to ≥ 80 vehicles per hour, preferably to ≥ 95 vehicles per hour.

In a further embodiment of the method according to the invention, automated outside cleaning was carried out by means of a cleaning system with redundant units required for outside cleaning. This furthermore ensures the even utilisation of the entire cleaning track, since possible problems of individual system components of the cleaning installations are compensated by the redundant arrangement so that unscheduled interruptions of operation can be avoided.

Moreover, another embodiment of the method according to the invention can provide that the detection of damage or technical defects to the automotive body is automated and is carried out by means of digitalized vision detection of all sides of the automotive body and consequent machine vision evaluation. In particular, it can be intended that, after identification through its unambiguous mark, a vehicle to be cinditioned is supplied to a very high-resolution video system which generates images of all sides of the vehicle body. To achieve the correspondingly high resolution, it may be intended that the vehicle passes a "light tunnel" inside which lighting is optimised (preferably ≥ 600 lux). For that, it may be intended that the vehicle is stopped for a certain time, preferably ≤ 10 s, more preferably ≤ 5 s, particularly preferably < 3 s to ensure the required exposure time for the visualisation of the automotive body sides. To ensure such a stop inside the light tunnel, a barrier or traffic lights may be provided which only allow the vehicle to continue after the completion of a corresponding stop inside the light tunnel.

In a particularly preferable embodiment of the method according to the invention, identification of the vehicle, automated air pressure measurement as well as automated detection of damage or technical defects on the automotive body take place practically simultaneously, for example by arranging the required components in said light tunnel.

In another embodiment of the method according to the invention, the recorded images of the automotive body sides are transferred to the data processing system using the unambiguous identification mark on the vehicle to detect damage or technical defects on the automotive body. The images are then compared to previous images of the identified vehicle. In the event of a definable deviation between previously recorded images and new images, damage to the automotive body is automatically registered in the data processing system for the identified vehicle. Through respective chronological storage of the recorded images, for example when a hirer picks up a hired vehicle and when the hirer returns the vehicle, the condition of the vehicle can be documented, e.g. over a hiring period. This way, possible damage to a vehicle can be unambiguously allocated to a certain period, namely the period between two consecutive pictures of the vehicle body. When the method according to the invention is for example applied in a car hire centre, it can be furthermore particularly intended that images of the automotive body of a hired vehicle are also taken when the vehicle leaves the car hire centre so as to allow even more detailed documentation of the vehicle condition. It can also be intended that further automated checking of the tyre pressure and/or tread depth is carried out mainly simultaneously with the visualisation of the automotive body when the vehicle leaves the car hire centre and that collected data are also transferred to the data collection system.

To ensure respective documentation of the vehicle condition, also in the event that a vehicle under application of the method according to the invention for hired vehicles is picked up by a hirer at a first location and returned to another, second location (one-way), in an embodiment of the method according to the invention, it may be intended that the data collection system is connected via an interface to a packet-transmitting network such as the Internet. This allows a corresponding exchange of vehicle data between different locations. A further development intends to save vehicle data from different locations to one central database system and to make them available through a central server. In particular, it can also be intended that, via the packet-transmitting network in the data collection system, vehicles that are identified as supplied to the conditioning facility are provided with an electronic mark for specific further use. This allows the vehicle to be marked by a hire company, for example, even prior to conditioning, for a specific further customer or use and therefore to be configured according to that customer or use during conditioning or to be parked in a specific pick-up area.

In a further embodiment of the method according to the invention it is intended that a vehicle, provided no damage and/or technical defects have been detected, is parked in a pick-up area after interior cleaning and that the corresponding vehicle key is supplied to a central collection point via a suitable conveyor system whereas vehicle key, parking space and employee who has parked the vehicle are identified through an unambiguous mark, preferably an RFID mark, and registered in a data processing system. This allows to further complete documentation of the vehicle and to further increase efficiency during vehicle conditioning.

It may furthermore be intended that the vehicle keys of the parked vehicles at the central collection point are arranged, preferably in groups, by a sender and transported to a receiver at a desk by means of a suitable conveyor system, whereas transport is carried out in a container secured against unauthorised access which can be identified through an unambiguous mark, preferably an RFID mark, and sender, container and receiver are registered in a data processing system. A suitable conveyor system could be a pneumatic post system. It ensures fast availability of the keys required for vehicles conditioned and parked for use at a location different from the location of conditioning, such as a hiring office of a vehicle hire company, while at the same time preventing unauthorised access to the keys required for vehicle use.

According to another embodiment of the method according to the invention, it is intended that the conditioning facility is equipped with several cleaning tracks and that, after automated identification, a vehicle is supplied to one cleaning track each by means of a control system. Supply to the cleaning tracks can take place for the purpose that the cleaning tracks are evenly used. This can further increase the efficiency of the method. Particularly preferred is it to supply the vehicle to a cleaning track by means a of flush-mounted light signal system in the floor. A light signal system can consist of light systems flush-mounted in the track, preferably LEDs, whose arrangement guides the driver in a specific direction specified by the running light.

In a preferable embodiment of the method according to the invention, data collected in the data collection system are conditioned so as to provide that they can be made available to a third party's merchandise management system at least in part via a suitable interface. In particular, it may be intended that data are at least partially provided to a vehicle hire company which can allow integration of those data into the data processing system of the hire company.

In the following, the procedure is further described using the example of a car hire centre (CHC) without limiting the method according to the invention to such embodiment.

### Example:

All vehicles of car hire companies participating in the car hire centre which are handled in a car hire centre are provided with RFID tags (passive or active). RFID (Radio Frequency Identification) allows to identify a vehicle through an RFID tag with an unambiguous mark, such as the license number, while driving through the RFID gate (antenna for reading tags). RFID tags are cost-effective and can be purchased at about 30 euro cents. As an alternative, or in addition, units to read license numbers which are based on video systems combined with vision systems can also be used for vehicle identification.
A central entrance is provided for customers who return a hired vehicle. That entrance is equipped with 5 high-resolution cameras. Those cameras film or photograph the driver as well as the passenger side including the vehicle front and rear upon entry into the car hire centre. In addition, an RFID gate as described above is installed in the entrance area. Thus, every hired car driving into the CHC is identified. Those entry data are immediately transmitted to an electronic data collection system (turnaround management system), in the following referred to as ETMS, and a check-in is generated with the respective time stamp of the entry. This allows billing to the split second. Immediately behind the RFID gate, there is an automated tyre pressure and tread depth measuring system installed in the area of the track. That measuring system measures the exact air pressure of all 4 vehicle wheels as well as the respective tread depth. Those data are assembled on the basis of the license number previously identified by RFID and stored in the data set (movement) in the ETMS which had previously been generated with the time stamp. Thus, already upon entering, time stamp, tread depth and air pressure of the vehicle that had just been driven in are already stored in the ETMS. After passing the air pressure measurement system, the customer drives through a light tunnel where he briefly stops (3 seconds). There, high-resolution pictures are taken of the entire vehicle under very bright conditions (> 600 lux) which are then also assigned to the generated ETMS movement. Thus, pictures of all sides of the driving in vehicle are stored in the ETMS.

After those process steps, the parking guidance system guiding the customer to the final parking position by means of LEDs in the floor takes over. At that parking position, an employee receives the customer and checks him into the ETMS using a handheld device. All handheld devices can read barcodes as well as RFID so that, already when the customer approaches, the RFID tag or a barcode on the vehicle is read and license number and hirer name are displayed on the handheld device. The customer can therefore be already addressed by his/her name when he/she opens the driver's door. Now, all data relevant for check-in are collected. They are written into the movement which had already been generated through RFID identification upon entering the CHC. The following data can be collected, for example:
mileage
fuel level
damage
degree of dirt inside and outside
technical defects
accessories
optional equipment
customer signature

If the employee at the check-in reports any damage to the vehicle, the images generated in the light tunnel are automatically transmitted from the ETMS to a damage archiving tool of the car hire company (e.g. Scan View) so as to also visually document every damage. Should the customer require a return receipt, it can be instantly e-mailed to him via the ETMS or printed with a printer integrated into the handheld device.

If a tyre defect or too small tread depth is detected upon entering the CHC, a warning message appears on the device of the check-in employee and the vehicle is directly assigned to the workshop, i.e. it is provided with a respective workshop mark.

After the check-in process, the vehicles are arranged side by side (cross check). Already in front of the installed car washes, there are plastic conveyor belts to transport the vehicles into the car washes. Thus, the vehicles must only be moved a few metres out of the check-in area where they have been parked in herringbone pattern onto the passing conveyor belt. The conveyor belt then transports the vehicles into the car wash. This ensures a continuous outflow of vehicles. A continuous plastic conveyor belt is used which transports the vehicles through car wash and interior cleaning and starts in front of the car wash. The washing facility for outside cleaning is provided with redundant units. Therefore, also in the event of a defective unit, washing can continue.

After outside washing, the vehicles are directly transported to the interior cleaning facility. There, 4 employees on each belt clean the vehicles. Another employee is responsible for oil and antifreeze level and refills if required. In addition, Tornador cleaners are used for special interior cleaning. Intensive cleaner is atomised into extremely fine particles by means of compressed air so as to partially dissolve and then remove heavy soiling. The use of an ozone device (O₃) is also intended. With O₃, smells are removed from vehicles, whereas the disintegration of O₃ into O₂ and O neutralises the smell in the vehicle.

At the exit of the interior cleaning facility, there is another RFID gate to detect completely cleaned vehicles and report them to the ETMS. Via a messaging system, car hire companies can mark any vehicles of their choice from the entry into the CHC. This way, they can block it for a specific customer, for example. An LCD monitor can be installed at the exit of the interior cleaning facility where the vehicles leave the belts to indicate, after the vehicle has been detected, the driver, who is to park the vehicle after completion of cleaning, if that vehicle is designated for a specific parking space. In that case, a message such as "Park S-class vehicle, M-IX7654 at VIP 0815" is displayed. That way, a vehicle can be actively controlled. In the exit area of the cleaning track, an automatic machine can be installed on the driver's side containing equipment of the car hire companies (mirror hangers, newspapers, etc.). The automatic machine is also equipped with an RFID reader which identifies vehicle and car hire company. The automatic machine delivers the desired equipment. If the vehicle is marked for a specific use or customer, the car hire company can store different equipment for male and female customers. Vehicles can thus be customised. Apart from that, car hire companies can use the messaging system to assign different equipment such as child seats, mobile navigation devices, etc. to a vehicle so that those items are placed in the vehicle. The automatic machine to equip the vehicles can also include a printer for hire contracts of the respective car hire company. This would not only allow the car hire companies to guide the vehicle to a specific parking space, but also to automatically print the hire contract for the next customer when the vehicle is identified by RFID. The vehicle key remains in the vehicle and the hire contract is placed on the dashboard.

After the vehicle has been identified by RFID and equipped with customised equipment, the driver moves it to the designated parking space. It is also possible to assign parking spaces for women, for example. Those are actively communicated and controlled via the messaging system when the vehicle leaves the cleaning track by e.g. the car hire company through their data processing system which is linked to the ETMS. Furthermore, parking spaces for electric vehicles can be established where the vehicles can be completely charged so as to ensure that the customer receives a functional vehicle.

Should the vehicle have to be refuelled, this can be done at a company petrol station. There, the vehicle is also identified at each petrol pump by RFID technology and the petrol volume is directly assigned to the vehicle in the ETMS. This allows billing to the end customer to the litre.

At the parking space, the vehicle is parked according to the instructions of the car hire companies. The driver uses a small terminal or handheld device to assign the parking space by scanning the RFID mark of the vehicle, the mark on his/her employee identity card and the mark of the parking space. For that, all parking spaces of the CHC are provided with RFID tags containing the parking space number. All employee identity cards have RFID as identification medium.

After parking the vehicle, the driver goes to a central location of the corresponding parking level (hire company level). At the point, a downpipe system or similar suitable transport system is installed. The vehicle key is only introduced into that system and then slides into a key office. At the same time, at every downpipe station, all parking space data are read from the employee's handheld device and automatically transferred to the ETMS.

In the key office, an employee carries out a system-based quality check. All data are already stored in the ETMS (check-in, fuelling, parking). The employee just checks if any components are missing. The key fobs of the car hire companies are provided with an RFID tag. The employee holds the key fob in front of the RFID reader and obtains all vehicle data from the ETMS. After a successful check, the employee places the keys that are ready for hand-over in another transport system, such as a modified pneumatic post system, which then supplies the vehicle keys to the car hire companies. The transport system is combined with a high-resolution video system which records all activities of sending in detail (filling of cases). In addition to the video system, all RFID tags of the keys can be read to a case containing the marks. Thus, the combination of the two systems (video and RFID) ensures very high security for the hand-over of vehicle keys to the car hire company. After filling is completed, the case is sent to the respective car hire company. At the car hire company, the case can be removed after authentication at the transport system. When the data processing system of the car hire company is directly linked to the ETMS, the vehicles pertaining to the keys have at that moment already been billed and all required data, such as mileage and parking space, have been stored in the system of the car hire company.

Another RFID reader can be installed at the exit of the CHC. That way, the ETMS recognises when a previously parked vehicle leaves the car hire centre. This allows parking space management without sensors for parking space occupation. The ETMS always knows the current parking space situation and can thus actively guide the drivers via the monitors. Via the ETMS or data processing systems linked to the ETMS, free parking spaces are also indicated to the car hire companies so they can define parking spaces for specific vehicles for their customers.

The exit of the car hire centre is secured by cameras installed around the vehicle. A pinhole camera takes focussed pictures of the driver. The other cameras can document the vehicle condition when the vehicle leaves the car hire centre and can also document further passengers.

The method according to the invention allows to make a vehicle available to the car hire company within ≤ 10 minutes after the vehicle has entered the CHC.

The following figures explain the method according to the invention more in detail.
Fig. 1 shows the sequential order of the application of the method according to the invention.
Fig. 2 shows a schematic of a light tunnel to take pictures of the automotive body in a method according to the invention.
Fig. 3 shows a schematic of a vehicle guiding system based on light signals in a method according to the invention.
Fig. 4 shows a schematic of the conveyor system design to transport vehicle keys in an embodiment of a method according to the invention.

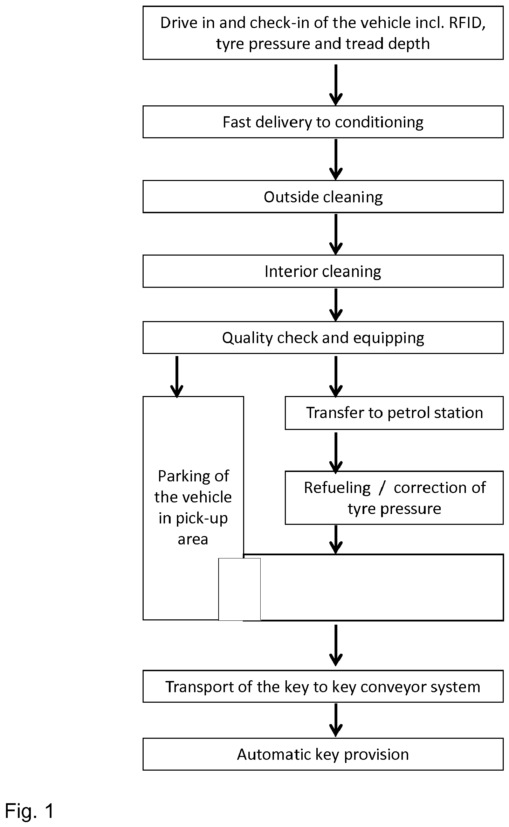

Fig. 1 shows the sequential order of the application of the method according to the invention. As a first step, the vehicle drives into a CHC. In the entrance area, the vehicle is identified through an RFID tag on the vehicle. Simultaneously, tyre pressure and tread depth are automatically measured. Pictures of all sides of the automotive body are also taken. Afterwards, the vehicle is guided via a light signal system to a location where the driver gets out and hands the vehicle over to personnel of the conditioning facility (check-in). After hand-over has been completed, the vehicle is first transported to automatic outside cleaning and then to interior cleaning on a continuous conveyor belt. After completion of cleaning, the vehicle is equipped as required and brought to the pick-up area where it is available to new hirers. After parking the vehicle in the pick-up area, the vehicle key is protected against unauthorised access and provided to the hire company via a key control centre so that the company can then hire out the vehicle again.

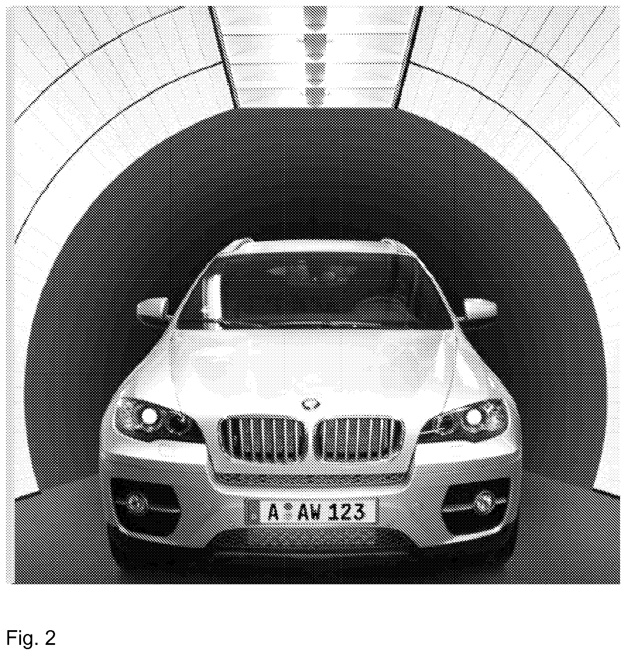

Fig. 2 shows a schematic of a light tunnel to take pictures of the automotive body in a method according to the invention. The entrance and exit area of the light tunnel are equipped with systems for separation, such as barriers or traffic lights, to ensure that only one vehicle at a time drives into the light tunnel and stops there during the defined residence time, e.g. ≤ 5 seconds. Inside the light tunnel lighting systems ensure that high-resolution pictures can be taken of all sides of the automotive body. Suitable cameras are installed in the light tunnel. In the track of the light tunnel, there are measuring systems integrated for automatic checking of tyre pressure and tread depth so as to forcibly drive a vehicle over the measuring systems when the light tunnel is accessed and to ensure measuring of tyre pressure and tread depth. Apart from that, there is an RFID receiver provided in the light tunnel which can unambiguously identify the vehicle in the light tunnel from the RFID tag. After all pictures have been taken and tyre pressure and tread depth have been measured, all obtained data are collected by means of RFID detection and stored in a data processing system.

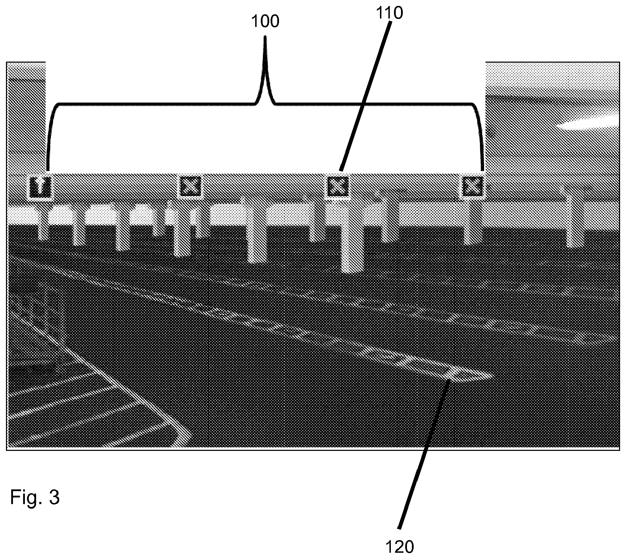

Fig. 3 shows a schematic of a vehicle guiding system based on light signals in a method according to the invention. A parking guidance system 100 guides a customer to the final parking position for the check-in. The parking guidance system may be equipped with overhead light signs 110 and/or LED light chains 120 in the floor or track. After drive in into the CHC the costumer is identified via the RFID mark of the vehicle. Based on the information in the EMTS on the vehicle as well as on the capacity utilisation of the track the customer is guided via the parking guidance system 100 to a check-in position. At the check-in position the hired vehicle is handed over from the customer to the conditioning service.

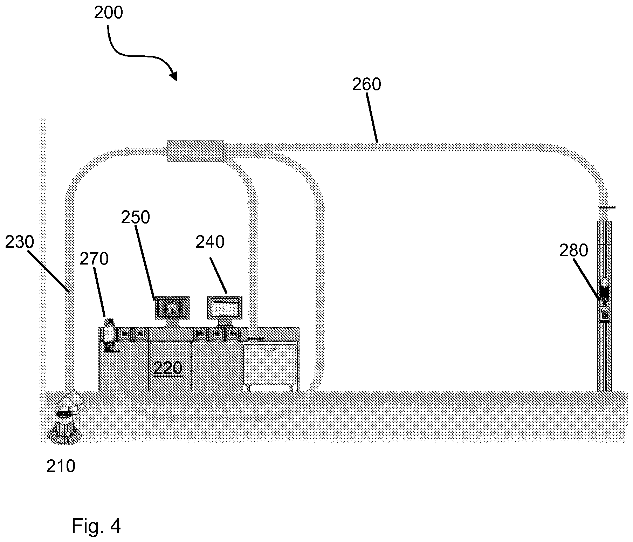

Fig. 4 shows a schematic of the conveyor system design to transport vehicle keys in an embodiment of a method according to the invention. The conveyor system 200 has a loading point 210 from which keys of vehicles already parked in the designated parking space after conditioning are transferred to a key office 220. Conveying of the key may be performed by a downpipe system 230. At the loading point 210 the key all relevant parking space information regarding the vehicle to which the key belongs is read from an employee's handheld device and automatically transferred to the ETMS 240. In the key office 220, an employee carries out a system-based quality check. All data are already stored in the ETMS 240 (check-in, fuelling, parking). The employee just checks if any components are missing. The key fobs of the car hire companies are provided with an RFID tag. The employee holds the key fob in front of the RFID reader 250 and obtains all vehicle data from the ETMS. After a successful check, the employee places the keys that are ready for hand-over in another transport system, such as a case 270 of a modified pneumatic post system 260, which then supplies the vehicle keys to the car hire companies. After filling is completed, the case 270 is sent to the respective car hire company. At the car hire company, the case 270 can be removed after authentication at the transport system station 280. When the data processing system of the car hire company is directly linked to the ETMS 240, the vehicles pertaining to the keys have at that moment already been billed and all required data, such as mileage and parking space, have been stored in the system of the car hire company.

## Claims

1. A method to condition vehicles, particularly hired vehicles, including the following steps:
- supply of vehicle to a conditioning facility;
- automated identification of the vehicle from an unambiguous identification mark;
- automated detection of tyre pressure and/or tread depth;
- detection of damage and/or technical defects of the interior and/or automotive body;
- supply of the vehicle to automatic outside cleaning;
- supply of the vehicle cleaned on the outside to interior cleaning, and
- provision of the cleaned vehicle in a pick-up or workshop area
which characterises through the collection and evaluation of information about tyre pressure and/or tread depth as well as of detected damage and/or technical defects in combination with the unambiguous identification of the vehicle in a data processing system, the electronic marking of the vehicle depending on the evaluation result in the data processing system and through parking of the vehicle in the pick-up or workshop area depending on the mark, wherein collection and evaluation of information about the tyre pressure and the tread depth is simultaneously achieved by means of a load sensor in a computer-based process specifying a girth centre area of the vehicle tyre and measuring of the forces exerted crosswise to the driving direction, wherein automated outside cleaning and interior cleaning are carried out on a cleaning track consisting of a continuous conveyor belt on which the vehicles are first subject to automated outside cleaning and then to interior cleaning.

2. Method according to claim 1, wherein at least the detection of tyre pressure and/or tread depth as well as the detection of mileage and fuel level are carried out prior to cleaning the vehicle.

3. Method according to one of the preceding claims, wherein identification of the vehicle is carried out by means of an RFID sensor which reads an unambiguous RFID mark attached to the vehicle without contact.

4. Method according to one of the preceding claims, wherein automated outside cleaning is carried out by means of a cleaning system with redundant units required for outside cleaning.

5. Method according to one of the preceding claims, wherein the detection of damage or technical defects to the automotive body is automated and is carried out by means of digitalized vision detection of all sides of the automotive body and consequent machine vision evaluation.

6. Method according to claim 5, wherein the recorded images of the automotive body sides are transferred to the data processing system using the unambiguous identification mark on the vehicle to detect damage or technical defects on the automotive body. The images are then compared to previous images of the identified vehicle and, in the event of a definable deviation between previously recorded images and new images, damage to the automotive body is automatically registered in the data processing system for the identified vehicle.

7. Method according to one of the preceding claims, wherein the data collection system is connected to a packet-transmitting network via an interface and vehicles that are identified as supplied to the conditioning facility can be provided with an electronic mark for a specific further use via the packet-transmitting network in the data collection system.

8. Method according to claim 7, wherein the vehicle is parked in a specific pick-up area on the basis of the mark set via the packet-transmitting network and/or is individually configured for a further use.

9. Method according to one of the preceding claims, wherein the vehicle, provided no damage and/or technical defects have been detected, is parked in a pick-up area after interior cleaning and the corresponding vehicle key is supplied to a central collection point via a suitable conveyor system whereas vehicle key, parking space and employee who has parked the vehicle are identified through an unambiguous mark, preferably an RFID mark, and registered in a data processing system.

10. Method according to claim 9, wherein the vehicle keys of the parked vehicles at the central collection point are arranged, preferably in groups, by a sender and transported to a receiver at a desk by means of a suitable conveyor system, whereas transport is carried out in a container secured against unauthorised access which can be identified through an unambiguous mark, preferably an RFID mark, and sender, container and receiver are registered in a data processing system.

11. Method according to one of claims 4 to 10, wherein the conditioning facility is equipped with several cleaning tracks and that, after automated identification, a vehicle is supplied to one cleaning track each by means of a control system.

12. Method according to claim 11, wherein the vehicle is supplied to a cleaning track by means a of flush-mounted light signal system in the floor.

13. Method according to one of the preceding claims, wherein data collected in the data collection system are conditioned so as to provide that they can be made available to a third party's merchandise management system at least in part via a suitable interface.
